(19) Europäisches Patentamt
European Patent Office
Office européen des brevets

(11) Publication number: **0 045 096**
**B1**

(12) # EUROPEAN PATENT SPECIFICATION

(45) Date of publication of patent specification: **12.09.84**

(51) Int. Cl.$^3$: **C 04 B 15/12,** C 04 B 13/12, C 04 B 31/00

(21) Application number: **81200473.7**

(22) Date of filing: **29.12.78**

(60) Publication number of the earlier application in accordance with Art. 76 EPC: **0 002 876**

(54) **Method of producing hydrothermally hardened granules.**

(30) Priority: **30.12.77 NL 7714619**

(43) Date of publication of application: **03.02.82 Bulletin 82/05**

(45) Publication of the grant of the patent: **12.09.84 Bulletin 84/37**

(84) Designated Contracting States: **BE CH DE FR GB IT LU SE**

(56) References cited:
**BE-A- 848 587**
**DE-A- 225 125**
**FR-A-1 538 714**
**GB-A-1 272 176**
**GB-A-1 388 556**
**US-A-3 634 567**
**US-A-3 895 088**

(73) Proprietor: **Aarding Weerstandlas B.V.**
**70 Industrieweg**
**Nunspeet (NL)**

(72) Inventor: **Loggers, Hendrik**
**Prinses Beatrixlaan 37**
**NL-3958 XJ Amerongen (NL)**
Inventor: **Versteeg, Gijsbert**
**Stationslaan 55**
**NL-8071 CK Nunspeet (NL)**

(74) Representative: **van der Veken, Johannes Adriaan**
**EXTERPATENT Willem Witsenplein 4**
**NL-2596 BK 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 045 096 B1

## Description

The invention relates to a method of producing hydrothermally hardened granules by reaction of a calcium oxide containing product and a silica containing product in the presence of phosphate ore by heating under moist conditions and under pressure. Such a method is known from BE—A—848.587. In this method granulates are formed by mixing a silica containing product and a calcium oxide containing product with a phosphate ore and curing of this mixture in an autoclave.

This method presents the disadvantage that it is difficult to obtain granules of a regular composition. Moreover, this method cannot provide granules having the phosphate ore in the core which is preferred in further reactions of the phosphate ore with carbon in order to prepare elemental phosphorus.

The invention now aims to provide a method which does not present these disadvantages.

This aim is attained in that a silica sand containing phosphate ore is granulated with water, the granules are coated with a calcium oxide containing and/or a silica containing product and the coated granules are cured.

This method provides granules of a very regular composition and having the active compound in its core.

From Dutch patent application 6608852 appears that granulated phosphate rock, or shaped granules containing phosphate rock, is of great importance for recovering elementary phosphorus from phosphate rock by reduction with carbon in the presence of silica.

In this respect it should be noted that elementary pure phosphor as obtained in this way can be used in many processes contrary to the fluorine containing phosphoric acid as obtained according to the attack of phosphate ore by sulfuric acid. Moreover, this so called "wet process" involves the formation of high amounts of gypsum containing harmful metals.

In the method of said Dutch patent application the reaction proceeds in accordance with the following equation:

$$Ca_3(PO_4)_2 + 5C + 3SiO_2 \text{———} 3CaOSi_2 + P_2 + 5CO.$$

Besides the necessary phosphate rock in granulated form it is also necessary to use in the reaction, silica containing gravel of a particular size from 15 to 50 mm. Direct use of sand is not possible.

This process is rather complicated and energy expensive as it requires sintering of phosphate ore mixed with clay in order to obtain the granulated phosphate rock, silica containing material of a particular size and separate carbon in the form of coke pieces.

The impossibility of using sand in this process is rather disadvantageous as in most countries having important sources of phosphate rock, gravel is not available, but sand is present in unlimited amounts.

The method of the invention now overcomes this problem as explained hereinbefore.

Products obtained in accordance with the invention contain both phosphate rock and silica, and may have dimensions and strengths which are necessary so as to properly carry out the method.

It has turned out that carbon as needed in such a method can also be incorporated in the granules obtained in accordance with the invention.

The binding in the granules is obtained by reaction of calcium oxide and silica during the hardening phase.

The silica as required is always available in the sand grain skin so that sand containing phosphate ore is able to react with the calcium-hydroxide agent.

The specific surface of a sand is, therefore, an indication of the amount of binding agent that can be formed.

If a particular sand should have a specific surface which is too small to enable conversion of all the lime during the hardening phase, it is useful to prolong the hardening time.

After such an extension of time, the compression strength will be found to have increased. This is due to the fact that during the extended time of hardening the lime slowly penetrates through the reaction skin formed around sand grain, and so is able to react further with the silica. If, on the other hand the sand has a large specific surface, even if the lime is present in small quantities, the maximum amount of binding agent to be expected, will be obtained more rapidly.

Therefore, a second important piece of information is the amount of active calcium oxide contained in a calcium oxide containing product used. The quantity of active calcium oxide is determined by the so-called "sugar method".

When mixing three components, such as ground phosphate rock with one type of sand and a second type of sand, it is possible to prepare a product with two kinds of sand.

After all, the ground phosphate rock may also contain sand and thus a need for calcium oxide.

This need for lime may be determined by determining the sugar-soluble calcium oxide content, after a hydrothermal treatment, which occurs in mixtures, that were made with different percentages of calcium oxide.

The silica containing product has a Blaine fineness of 800 to 4500, preferably approximately 880. It is possible to work effectively with a silica-containing product having a Blaine fineness of 800 to 900 and one fineness of 350 to 450 Blaine.

The methods of the invention lend themselves also in particular to the production of granules of calcium oxide containing and silica containing products, which also contain ground

or unground carbon material such as coke.

Since the product of the invention is obtained artificially, it is possible to adapt the dimensions of the granules so as to comply with particular requirements.

When performing tests with phosphate rock, it even provided possible to include the phosphate rock in the unground condition.

As the granulating properties of phosphate rock depends on the amount of fine material and the amount of adhesive present among said fine material the adhesive may be only water.

The calcium oxide containing component may consist of Portland cement of mixtures of Portland cement with calcium hydroxide or mixture which besides calcium oxide containing materials contain ground blastfurnace slags.

After having made a particular choice, for example for the electrochemical recovery of elementary phosphorus, it is further possible to calculate the amount of free silica containing material needed for the reaction.

It will be clear that the products for this mode of recovery of phosphorus may also contain carbon besides phosphate rock and the strength-imparting agent may be used fully mixed or partially mixed with the reactive filler and partially or entirely as the shell material.

Although the invention is of interest to the preparation of elementary phosphors there is also, according to article 780 of FERTILIZER ABSTRACTS 7 (no. 5) of May 1974, an increased interest against for the recovery of $P_2O_5$ by means of a blastfurnace process that was in vogue around 1929 to 1939 in the United States of America. Granulated materials are required for this purpose as well.

Example I

A phosphate rock already containing sand is mixed with water and granulated. A binder of ground sand and calcium hydroxide is put around the grains as a shell, and the grains are hydrothermally cured in an autoclave. The agglomerates have a high strength.

**Claims**

1. A method of producing hydrothermally hardened granules containing phosphate ore by reaction of a calcium oxide containing product and a silica containing product in the presence of phosphate ore by heating under moist conditions and under pressure, characterized in that a silica sand containing phosphate ore is granulated with water, the granules are coated with a calcium oxide containing and/or a silica containing product and the coated granules are cured.

2. A method according to claim 1, characterized in that a calcium oxide containing product is also added to the phosphate ore.

3. A method according to claim 1 or 2, characterized in that carbon containing material, preferable coke is incorporated in the granules.

4. A method according to one of more of the claims 1 to 3, characterized in that the silica containing product has a Blaine fineness of 800 to 4500, preferably approximately 880, more preferably the silica containing products have two finenesses viz., one fineness of 800 to 900, and one fineness of 350 to 450 Blaine.

**Patentansprüche**

1. Verfahren zur Herstellung von ein Phosphaterz enthaltenden, hydrothermisch gehärteten Granulaten durch Umsetzen eines Calciumoxid enthaltenden Produkts und eines Siliciumdioxid enthaltenden Produkts in Gegenwart eines Phosphaterzes durch Erhitzen unter feuchten Bedingungen und unter Druck, dadurch gekennzeichnet, daß ein Siliciumdioxid-Sand enthaltendes Phosphaterz mit Wasser granuliert wird, die Granulate mit einem Calciumoxid enthaltenden und/oder Siliciumdioxid enthaltenden Produkt beschichtet und die beschichteten Granulate gehärtet werden.

2. Verfahren nach Anspruch 1, dadurch gekennzeichnet, daß ebenso ein Calciumoxid enthaltendes Produkt dem Phosphaterz zugegeben wird.

3. Verfahren nach Anspruch 1 oder 2, dadurch gekennzeichnet, daß ein Kohlenstoffhaltiges Material, vorzugsweise Koks, in die Granulate eingearbeitet wird.

4. Verfahren nach mindestens einem der Ansprüche 1 bis 3, dadurch gekennzeichnet, daß das Siliciumdioxid enthaltende Produkt eine Blaine-Feinheit von 800 bis 4 500, vorzugsweise etwa 880 besitzt, wobei es insbesondere bevorzugt ist, daß die Siliciumdioxid enthaltenden Produkte zwei Feinheiten besitzen, nämlich eine Blaine-Feinhet von 800 to 900 und eine Blaine-Feinheit von 350 bis 450.

**Revendications**

1. Un procédé de production de granules contenant un minerai phosphoreux et durcis par traitement hydrothermique par réaction d'un produit contenant de l'oxyde de calcium et d'un produit contenant de la silica en présence de minerai phosphoreux par chauffage en voie humide et sous pression, caractérisé en ce qu'un sable de silice contenant du minerai phosphoreux est granulé en présence d'eau, en ce que les granules sont enrobés d'un produit contenant l'oxyde de calcium et/de la silice et les granules enrobés sont traités.

2. Un procédé selon la revendication 1, caractérisé en ce qu'il est également ajouté au minerai phosphoreux un produit contenant de l'oxyde de calcium.

3. Un procédé selon la revendication 1 ou 2, caractérisé en ce qu'un matériau contenant du carbone, de préférence du coke, est incorporé dans les granules.

4. Un procédé selon un ou plusieurs des revendications 1 à 3, caractérisé en ce que le

produit contenant de la silice présente une finesse Blaine de 800 à 4 500, de préférence approximativement 880, de façon préférentielle, les produits contenant de la silice présentent deux finesses, à savour une finesse de 800 à 900, et une finesse de 350 à 450 Blaine.